# NEUE EUROPÄISCHE PATENTSCHRIFT

(11) **EP 0 199 941 B2**
(45) Veröffentlichungstag und Bekanntmachung des Hinweises auf die Entscheidung über den Einspruch: **03.05.1995**
(45) Hinweis auf die Patenterteilung: 27.03.1991
(21) Anmeldenummer: 86103242.3
(22) Anmeldetag: 11.03.1986
(51) Int. Cl.: C04B 28/24

(54) **Anorganische Formmasse mit Gehalten einer steinbildenden Komponente**
Inorganic shaped body containing a petrifying component
Masse minérale façonnée contenant un composant pétrifiant

(30) Priorität: 06.04.1985 DE 3512515; 06.04.1985 DE 3512516
(43) Veröffentlichungstag der Anmeldung: 10.12.1986
(73) Patentinhaber: HT TROPLAST AG, D-53839 Troisdorf (DE)
(72) Erfinder: Engels, Hans-Werner, D-5210 Troisdorf (DE); Neuschäffer, Karl-Heinz, Dr., D-5653 Leichlingen (DE); Spielau, Paul, Dr., D-5210 Troisdorf-Eschmar (DE)

(56) Entgegenhaltungen:
- WO-A-85/00035
- DE-A- 3 246 602
- DE-B- 1 238 832
- FR-A- 2 169 864
- Broschüre vom H.Keller, die einen Nachdruck von H.Scholz umfasst, erschienen in Der Eisenbahn-Ingenieur, Nov. 1974
- Beschluss des Deutschen Patentamtes vom 27/7/90 zum Widerruf des Patentes DE 35 12 515
- Beschluss des Deutschen Patentamtes vom 27/7/90 zum Widerruf des Patents DE 35 12 516
- Römpp, Chemie Lexikon, S. 317, 1972

## Beschreibung

Die Erfindung betrifft eine anorganische, wasserhaltige, bei niedrigen Temperaturen härtbare Formmasse aus einer anorganischen, festen Reaktionskomponente und Alkalisilikatlösung mit ggf. enthaltenen Anteilen von Füll- und Hilfsstoffen sowie Formkörper aus dieser Formmasse.

Die Besonderheit von solchen anorganischen Formassen liegt darin daß formbare, und insbesondere gießbare Mischungen nach kurzer Zeit aktiv durch Reaktion der Komponenten härten und dann entformbar sind.

Die weitere Besonderheit liegt in einer Härtung bei nur geringen Temperaturen bis höchstens 200° C, im Regelfall höchstens 100° C, wobei hohe Biegefestigkeiten erreicht werden. Derartige Biegefestigkeiten sind vergleichbar mit denen von Keramik, wobei jedoch Keramik solche Biegefestigkeiten nur nach dem Brennen bei sehr hohen Temperaturen erreicht.

Formmassen mit diesen Eigenschaften sind nur erhältlich mit ganz bestimmten Feststoffen als aktive, steinbildende Komponente.

So ist beispielsweise nach der DE-0S 32 46 602 ein Oxid-Gemisch aus Si0₂ und Aluminiumoxid eine steinbildende Komponente, wobei dieses Oxid-Gemisch aus amorphem Si0₂ und aus im wesentlichen kristallinem Aluminioxid sowie weiteren Komponenten besteht. Dieses Oxid-Gemisch ist wasserfrei und entsteht insbesondere bei speziellen Prozessen, besonders als Staub, durch Abscheidung aus der Dampf- oder Gasphase, bei der Herstellung von Korund.

Ein solches Oxid-Gemisch hat sehr stark wechselnde Zusammensetzungen und eine ständig wechselnde, nicht vorherbestimmbare Aktivität als steinbildende Komponente.

Solche Oxid-Gemische sind daher schwierig zu bearbeiten und erfordern eine Bestimmung der Aktivität als steinbildende Komponente durch Versuche und anschließende Vermischung von Materialien verschiedener Aktivität zu Standardmaterialien.

Es bestand daher die Aufgabe, eine wasserhaltige, härtbare Formmasse auf Basis von festen, härtbaren, aktiven Komponenten zu schaffen, welche eine genügende Aktivität aufweisen und in größeren Mengen von gleicher Qualität verfügbar sind

Gegenstand der Erfindung ist daher eine anorganische, wasserhaltige, bei niedrigen Temperaturen härtbare Formmasse aus einer anorganischen, festen Komponente und Alkalisilikatlösung mit ggf. enthaltenden Anteilen von Füllstoffen und Hilfsstoffen, dadurch gekennzeichnet, daß als feste Reaktionskomponente 0,5 bis 4,0 Gew.-Teile
a) glasartig amorphe Elektrofilterasche aus Steinkohle-Kraftwerken mit Brennkammertemperaturen von 1600 bis 1700°C mit 45 bis 60 Gew.-% SiO₂-Glas, 25 bis 35 Gew.-% Al₂O₃ neben Fe₂O₃ oder
b) gemahlener kalzinierter Bauxit oder
c) einer Mischung aus a) und b)
je Gew.-Teil Alkalisilikatlösung mit 1,2 bis 2,5 Mol SiO₂ je Mol K₂0 bzw. Na₂O enthalten ist und daß die Formmasse einen Wassergehalt von 20 bis 65 Gew.-%, bezogen auf die feste Reaktionskomponente, aufweist.

Vorzugsweise ist kalzinierter Bauxit der Komponente b) in Mengen von 0,5 bis 3,0, sehr bevorzugt 0,6 bis 2,1 Gew.-Teilen, je Gew.-Teil Alkalisilikatlösung enthalten. Diese sogenannte Elektrofilterasche der Komponente a) entsteht in Steinkohle-Kraftwerken nur bei BrennkammerTemperaturen von 1.600 bis 1.700° C und ist aufgrund dieser Entstehung von gleichartiger Reaktivität als Bestandteil der Formmasse. Die Elektrofilterasche scheidet sich in solchen Kraftwerken in den Elektrofiltern aus den Rauchgasen ab und ist dementsprechend feinteilig.

Im Regelfall liegt die Korngröße zu 65 % unter 10 »m, zu 80 % unter 20 »m und 90 % unter 60 »m. Die Analyse der meisten Proben liegt bei 48 bis 52 Gew.-% SiO₂, 25 bis 30 Gew.-% Al₂O₃ und 8 bis 11 % Fe₂O₃, wobei weitere Bestandteile nur in geringen Mengen enthalten sind.

Die Elektrofilterasche ist nach der Erscheinung ein silikatisches Glas, überwiegend ein Aluminiumeisensilikat-Glas mit enthaltenden Anteilen anderer Oxide.

Obwohl Gläser im allgemeinen eine geringe Reaktionsfähigkeit mit Alkalien besitzen, hat die Elektrofilterasche ein großes Reaktionsvermögen mit der genannten Alkalisilikatlösung.

Der bevorzugte Anteil der an der Reaktion beteiligten Elektrofilterasche beträgt 0,8 bis 3,0 Gew.-Teile je Gew.-Teil Alkalisilikatlösung. Es ist jedoch möglich, Elektrofilterasche auch in Art eines Füllstoffes einzusetzen, wobei dann ein Teil der Elektrofilterasche nicht aktiv an der Steinbildung teilnimmt. In diesem Fall kann Elektrofilterasche der gesamte feste Anteil, bevorzugt bis zu 95 % der festen Anteile sein.

Kalzinierter Bauxit entsteht durch Erhitzen von gebrochenem bzw. gemahlenem Bauxit auf Temperaturen von ca. 400 bis 1.000° C, wodurch der Wassergehalt des Bauxits praktisch vollständig entfernt wird. Der natürliche Bauxit ist ein Gemisch mehrerer Aluminiumsilikat-Mineralien mit, je nach Fundort, wechselnder Zusammensetzung von 50 bis 70 Gew.-% Al₂0₃, 0 bis 25 Gew.-% Fe₂0₃, 12 bis 40 Gew.-% Wasser, 2 bis 30 Gew.-% Si0₂ sowie kleineren Anteilen weiterer Stoffe.

Überraschend besitzt kalzinierter gemahlener Bauxit die Eigenschaft, mit Alkalisilikatlösungen bei nur geringen Temperaturen der Härtung steinbildend zu reagieren, obgleich weitere der zahlreichen Minerale auf Basis von Aluminiumoxid oder Aluminiumsilikate weder im ursprünglichen noch im kalzinierten Zustand diese Eigenschaft haben.

Kalzinierter Bauxit als fester Bestandteil des härtenden Systems ist sogar dem weitgehend amorphen Oxid-Gemisch nach der DE-OS 34 46 602 darin überlegen, daß Biegefestigkeiten zwischen 15 und 18 N/mm² erreicht werden können.

Eine feine Mahlung des Bauxits ist nicht erforderlich, vielmehr ist eine Mahlfeinheit ausreichend, worin die gröbsten Teilchen im Bereich von 0,25 bis ca. 0,32 mm liegen.

Es ist möglich, einen Anteil von bis zu 10, vorzugsweise bis zu 3 Gew.-% der Komponente b) ggf. auch den Komponenten a) oder c) durch den bei der Herstellung von Korund, Mullit o.ä. entstehenden Ofenfilterstaub zu ersetzen. Ofenfilterstaub nach DE-OS 32 46 602 ist ein wasserfreies Oxid-Gemisch aus amorphem Si0₂ und Al₂0₃. Obgleich nur kleine Anteile des Oxid-Gemisches zugesetzt werden, wird die Reaktionszeit bei der Härtung auf etwa die Hälfte herabgesetzt.

In der Alkalisilikatlösung sind bevorzugt 1,3 bis 2,2 Mol Si0₂ je Mol K₂0 bzw Na₂0 enthalten. In Alkalisilikatlösungen ist K₂0 gegenüber Na₂0 bevorzugt. Die Alkalisilikatlösungen sollen Alkali im Überschuß enthalten. Sehr bevorzugt werden solche Alkalisilikatlösungen durch Auflösen von amorpher dispers-pulverförmiger, wasserhaltiger Kieselsäure, der sogenannten gefällten Kieselsäure, erhalten. Dabei wird bevorzugt eine Lösung der Alkalihydroxide oder festes Alkalihydroxid unter Zusatz von Wasser mit der gefällten Kieselsäure zur Reaktion gebracht.

Zur Herstellung der Formmasse werden die Komponenten gemischt, wobei zweckmäßig eine Vorreaktion der Komponenten a), b) oder c) und der alkalischen Kieselsäurelösung bei Raumtemperatur erfolgt, welche beispielsweise 20 bis 40 Minuten betragen kann. Nach einer solchen Vorreaktion werden geeignete Formen mit der Formmasse gefüllt, wobei im Regelfall nach relativ kurzer Zeit eine Verfestigung eintritt, die ein Entformung erlaubt. Die Formkörper können in der Form oder bevorzugt nach Entformung gehärtet werden, wobei Temperaturen zwischen 50 und 100° C bevorzugt und überraschend ausreichend sind. Die Härtungszeit ist vergleichsweise kurz und liegt zwischen 20 und 40 Minuten. Soweit in der Form keine Verfestigung von selbst eintritt, ist in der Form,z.B. bei 50 bis 100° C, zu härten. Die Härtung kann auch bei höheren Temperaturen, bis z.B. 500° C erfolgen, soweit dabei keine Verdampfung von noch nicht gebundenem Wasser erfolgt.

Auch eine Härtung unter Druck bei 50 bis z.B. 500° C, vorzugsweise 50 bis 200° C, kann erfolgen.

Es werden Formkörper mit einer überraschend hohen Biegefestigkeit erhalten, welche 10 N/mm² übersteigt und bei Werten bis zu 15 N/mm² und darüber liegen kann.

Die Alkalisilikatlösungen haben im allgemeinen einen Wassergehalt von 28 bis 45 Gew.-%, der bei den nicht bevorzugten Natron-Wasserglaslösungen auch bis zu 60 Gew.-% sein kann, wobei die wasserärmeren Lösungen bevorzugt sind. In den Formmassen kann der Wassergehalt 20 bis 65 Gew.-%, bezogen auf die aktiven steinbildenden Bestandteile und ohne Berücksichtigung der Füllstoffe, betragen wobei Wassergehalte von 26 bis 58 Gew.-% bevorzugt sind.

Die als feste Reaktionspartner dienenden Ausgangsstoffe Elektrofilterasche, kalzinierter Bauxit und ggf. Oxid-Gemisch sind praktisch unbegrenzt lagerbar, weiterhin ist die gefällte Kieselsäure als rieselfähiges und auf lange Zeit lagerfähiges Pulver zugängig, kann jedoch auch filterfeucht oder als breiiges Gel Verwendung finden.

Füllstoffe können in Mengen bis zu beispielswiese 1.000 g, vorzugsweise bis zu 400 g, je 100 g der steinbildenden Komponente in der Formmasse enthalten sein.

Die Art der Füllstoffe ist sehr vielfältig, wobei einfach zugängige, anorganische Stoffe in gemahlener oder verteilter Form bevorzugt werden, beispielsweis e Gesteinsmehle, Basalte, Tone, Feldspäte, Glimmer-Mehl, Glas-Mehl Quarz-sand oder Quarz-Mehl, Bauxit-Mehl, Tonerdehydrat und Abfälle der Tonerde-, Bauxit- oder Korund-Industrie, Aschen, Schlacken sowie mineralische Fasermaterialien. Weiterhin können organische Fasermaterialien, beispielsweise Cellulose, Fasern oder synthetische Fasern, als verstärkende Füllstoffe anwesend sein. Als Füllstoff ist von besonderem Wert Flugasche aus Steinkohle-Kraftwerken, die Kesseltemperaturen unter 1.600° C haben. Solche Flugasche ist nicht reaktionsfähig oder steinbildend, jedoch wegen der Feinteiligkeit gut einmischbar.

Der Vermahlungsgrad und die Kornfeinheit sind auf den jeweiligen Verwendugszweck abzustimmen, wobei häufig sehr feine Anteile neben Körnungen bestimmter Größe nebeneinander zweckmäßig sind und die physikalischen Eigenschaften mitbestimmen.

Eine Färbung, insbesondere durch Pigmentfarben, ist möglich.

Die Formkörper weisen im allgemeinen nur eine geringe Formschwindung und keine Rißbildung bei der Härtung auf, wobei eine gute Durchmischung der Formmasse Voraussetzung ist.

Die hohe Bruchfestigkeit erlaubt auch die Herstellung von Formkörpern großer Dimensionen und großflächiger flacher Formkörper, die beispielsweise als Platten für die Verkleidung von Wänden oder für die Deckung von Dächern in Art von Schieferplatten. Klinkern oder Bekleidungen brauchbar sind und dort durch Biegebruchfesfigkeit einen besonderen Wert aufweisen.

Die Formmassen ermöglichen eine gute Formtreue und erlauben bestimmte Oberflächenstrukturen, Aussparungen und Hinterschneidungen auszuprägen.

Soweit gewollt, kann eine nachträgliche Bearbeitung der Oberfläche durch z.B. Schleifen, Fräsen und Bohren erfolgen. Wenn gewollt, kann die Oberfläche mit einem Lack versehen werden.

Der besondere Vorteil der erfindungsgemäßen Formkörper liegt darin, daß Formkörper erhalten werden, die vielfach keramische Formkörper ersetzen können, jedoch auf energiesparende Weise hergestellt werden, da ein Brennvorgang wie bei keramischen Materialien überflüssig ist.

### Beispiel 1

Elektrofilterasche aus der Hochtemperatur-Steinkohleverbrennung bei 1.600 bis 1.700° C in Kraftwerken, die ca. 50 bis 60 Gew.-% Si0₂ in Form von amorphem Glas neben ca. 30 Gew.-% Al₂0₃ sowie Fe₂0₃ und andere Oxide enthält, wird mit einer durch Auflösung von gefällter amorpher Kieselsäure in 50 Gew.-%iger Kaliumhydroxidlösung hergestellter Lösung, die 1,82 Mol Si0₂ je Mol K₂0 enthält, im Gewichtsverhältnis 3 : 2 gemischt und 30 Minuten stehen gelassen, dann werden Quarzsand und Quarzmehl in gleicher Menge, die der genannten Lösung entspricht, zugemischt, die Mischung in Formen gebracht und innerhalb 90 Minuten bei 85° C gehärtet. Biegefestigkeit: 13,1 N/mm².

### Beispiel 2

272 g der in Beispiel 1 beschriebenen Elektrofilterasche werden mit 106 g der in Beispiel 1 beschriebenen Lösung gemischt und 60 Minuten stehengelassen. Nach Zugabe von 106 g Quarzsand und Formfüllung wird bei 85° C in 30 Minuten gehärtet. Biegefestigkeit: 14,1 N/mm².

### Beispiel 3

106 g der Elektrofilterasche nach Beispiel 1 und 106 g der Lösung,wie in Beispiel 1 beschrieben, werden mit Füllstoffen, nämlich 126 g Ofenfilterstaub, der bei der elektrochemischen Verarbeitung von Bauxit zu Korund anfällt, und 106 g Flugasche, die in Steinkohle-Kraftwerken, die bei niedrigerer Temperatur arbeiten, als nicht reaktionsfähiger Stoff anfällt, gemischt, in Formen gebracht und innerhalb von 30 Minuten bei 85° C gehärtet. Biegefestigkeit: 12,5 N/mm².

### Beispiel 4

Durch Auflösen von gefällter Kieselsäure mit 48 Gew.-% Si0₂-Gehalt in amorpher Form in 50 Gew.-%iger Kaliumhydroxidlösung wird eine Kaliumsilikatlösung mit einem Molverhältnis Si0₂ zu K₂0 von 1,5 : 1 hergestellt. In 166g dieser Lösung werden 106 g fein gemahlener kalzinierter Bauxit (Korngröße unter 0,315 mm) und als nicht reaktionsfähiger Füllstoff 212 g Flugasche von Steinkohle-Kraftwerken eingebracht und homogenisiert, dann in Formen gebracht und innerhalb von 240 Minuten bei 85° C gehärtet. Die Prüfkörper haben eine Biegefestigkeit von 17,8 N/mm².

### Beispiel 5

166 g der in Beispiel 4 beschriebenen kalialkalischen Kieselsäurelösung werden mit 100 g gemahlenem kalzinierten Bauxit, mit 66 g reaktivem Ofenfilterstaub aus der Elektroschmelze von Bauxit zu Korund und mit 212 g Flugasche aus Steinkohle-Kraftwerken gemischt, in Formen eingebracht und bei 85° C in 30 Minuten gehärtet. Biegefestigkeit 13 N/mm².

### Beispiel 6

166 g der in Beispiel 4 genannten Kaliumsilikatlösung werden mit 186 g des feingemahlenen kalzinierten Bauxits, gemäß Beispiel 1, sowie als Füllstoff mit 212 g der Flugasche aus Steinkohle-Kraftwerken nach Beispiel 1 und mit 17 g Eisenoxidschwarz sowie 1,7 g Borax homogen gemischt, in Formen eingebracht und 120 Minuten bei 85° C gehärtet. Biegefestigkeit 11,5 N/mm².

### Beispiel 7

106 g Kieselsäurelösung, hergestellt wie in Beispiel 4 beschrieben, jedoch mit einem Molverhältnis von 1,8 Si0₂zu 1 K₂0, werden mit 2 g Ofenfilterstaub aus der Elektroschmelze von Bauxit zu Korund, mit 184 g kalziniertem Bauxit und 212 g Quarzmehl als Füllstoff gemischt, in Formen gegeben und bei 85° C gehärtet. Biegefestigkeit 17,2 N/mm².

### Beispiel 8

Beispiel 7 wird wiederholt, jedoch erfolgt die Zugabe des Füllstoffs Quarzmehl nach einer Vorreaktionszeit von 30 Minuten. Die Härtezeit bei 85° C verkürzt sich auf 60 Minuten. Biegefestigkeit 16,5 N/mm².

### Beispiel 9

Die Kieselsäurelösung gemäß Beispiel 7 wird mit 26 g Ofenfilterstaub, der bei der elektrochemischen Mullitherstellung anfällt, mit 166 g kalziniertem Bauxit, mit 106 g Quarzsand und mit 106 g Flugasche gemischt, in Formen gegeben und bei 85° C in 45 Minuten gehärtet. Biegefestigkeit 12 N/mm².

## Patentansprüche

1. Anorganische, wasserhaltige, bei niedrigen Temperaturen härtbare Formmasse aus einer anorganischen, festen Reaktionskomponente und Alkalisilikatlösung mit ggf. enthaltenden Anteilen von Füllstoffen und Hilfsstoffen, **dadurch gekennzeichnet**, daß als feste Reaktionskomponente 0,5 bis 4,0 Gew.-Teile
a) glasartig amorphe Elektrofilterasche aus Steinkohle-Kraftwerken mit Brennkammertemperaturen von 1600 bis 1700 °C mit 45 bis 60 Gew.-% SiO₂-Glas, 25 bis 35 Gew.-% Al₂O₃ neben Fe₂O₃ oder
b) gemahlener kalzinierter Bauxit oder
c) einer Mischung aus a) und b)
je Gew.-Teil Alkalisilikatlösung mit 1,2 bis 2,5 Mol SiO₂ je Mol K₂O bzw. Na₂O enthalten ist, und daß die Formmasse einen Wassergehalt von 20 bis 65 Gew.-%, bezogen auf die feste Reaktionskomponente, aufweist.

2. Formasse nach Anspruch 1, dadurch gekennzeichnet, daß die wässrige Lösung von Alkalisilikaten ganz oder teilweise durch Auflösen von amorpher dispers-pulverförmiger, wasserhaltiger Kieselsäure in Alkalihydroxiden oder deren wässrigen Lösungen hergestellt wird.

3. Formmasse nach einem der Ansprüche 1 oder 2, dadurch gekennzeichnet, daß die Komponenten a), b) oder c) zum Teil, vorzugsweise bis zu 10 Gew.-% durch ein als Ofenfilterstaub anfallendes Oxidgemisch aus amorphem SiO₂ und Aluminiumoxid ersetzt ist.

4. Formkörper, hergestellt aus Formmassen nach mindestens einem der Ansprüche 1 bis 3, dadurch gekennzeichnet, daß die festen Komponenten a), b) oder c) und/oder der Ofenfilterstaub und die Alkalisilikatlösung sowie vorzugsweise Füllstoffe gemischt werden, die entstehende Formmassen in Formen gefüllt wird, die verfestigte Formmasse als Formkörper der Form entnommen und ggf. bei Temperaturen von mindestens 50° C gehärtet wird.

5. Formkörper nach Anspruch 4, dadurch gekennzeichnet, daß die Härtung bei 50 bis 100°C erfolgt.

6. Formkörper nach Anspruch 4 und 5, dadurch gekennzeichnet, daß die Härtung in der Form erfolgt.

7. Formkörper nach Anspruch 4 und 5, dadurch gekennzeichnet, daß in der Form eine Verfestigung eintritt und die Härtung nach Entnahme des Formkörpers aus der Form erfolgt.

8. Formkörper nach Anspruch 4, dadurch gekennzeichnet, daß die Härtung bei 50 bis 500° C, vorzugsweise 50 bis 200° C, unter Druck erfolgt.

9. Formkörper nach einem der Ansprüche 4 bis 8, dadurch gekennzeichnet, daß ein Erhitzen bis 500° C nach der Verfestigung, als Härtung oder nach einer Härtung, bei Normaldruck oder bei erhöhtem Druck erfolgt.

## Claims

1. Inorganic water-containing moulding composition which is hardenable at low temperatures and formed from an inorganic solid reaction component and alkali silicate solution, with optionally amounts of filters and auxiliary substances being contained therein, characterised in that there are contained as solid reaction component 0.5 to 4.0 parts by weight of
a) vitreous amorphous electrofilter ash from coal-fired power stations with combustion chamber temperatures of 1600 to 1700°C with 45 to 60% by weight of SiO₂-glass, 25 to 35% by weight Al₂O₃ as well as Fe₂O₃ or
b) ground calcinated bauxite or
c) a mixture of a) and b)
per part by weight of alkali silicate solution with 1.2 to 2.5 mol of SiO₂ per mol K₂O or Na₂O, and that the moulding composition has a water content of 20 to 65% by weight related to the solid reaction component.

2. Moulding composition according to claim 1, characterised in that the aqueous solution of alkali silicates is produced completely or partially by dissolution of amorphous disperse pulverous water-containing silicic acid in alkali hydroxides or aqueous solutions thereof.

3. Moulding composition according to one of claims 1 or 2, characterised in that component a), b) or c) is replaced, in part, preferably up to 10% by weight, by an oxide mixture of amorphous SiO₂ and aluminium oxide deposited as furnace filter dust.

4. Shaped body produced from moulding compositions according to at least one of claims 1 to 3, characterised in that the solid components a), b) or c) and/or the furnace filter dusts and the alkali silicate solution, as well as preferably fillers, are mixed, the mounding composition being produced is filled into moulds, the solidified moulding composition is removed from the mould as shaped bodies and is hardened optionally at temperatures of at least 50°C.

5. Shaped body according to claim 4, characterised in that the hardening takes place at 50 to 100°C.

6. Shaped body according to claims 4 and 5, characterised in that the hardening takes place in the mould.

7. Shaped body according to claims 4 and 5, characterised in that a solidification occurs in the mould and the hardening takes place after removal of the shaped body from the mould.

8. Shaped body according to claim 4, characterised in that the hardening takes place under pressure at 50 to 500°C, preferably 50 to 200°C.

9. Shaped body according to one of claims 4 to 8, characterised in that a heating to 500°C takes place after the solidification, as hardening or after a hardening at normal pressure or at elevated pressure.

## Revendications

1. Masse moulable, inorganique. hydratée et durcissable à basse température, formée d'un composant réactionnel inorganique et solide et d'une solution de silicates alcalins, contenant éventuellement certaines quantités de charges et d'adjuvants, caractérisée en ce qu'elle contient, comme composant réactionnel solide, de 0,5 à 4,0 parties en poids:
a) de cendres d'électrofiltres amorphes et vitreuses provenant de centrales électriques à houille avec des températures de chambre de combustion comprises entre 1600 et 1700 °C et contenant de 45 à 60 % en poids de verte de SiO₂, de 25 à 35 % de Al₂0₃ en plus du Fe₂O₃, ou
b) de bauxite calcinée et broyée en poudre, ou
c) d'un mélange de a) et b), par partie en poids de solution de silicates alcalins, avec 1,2 à 2,5 moles de SiO₂ par mole de K₂0 ou de Na₂O, et en ce que la masse moulable présente une teneur en eau de 20 à 65 % en poids, par rapport au composant réactionnel solide.

2. Masse moulable selon la revendication 1, caractérisée en ce qu'on prépare la solution aqueuse de silicates alcalins, entièrement ou en partie, par dissolution d'acide silicique hydraté, amorphe, sous forme de poudre dispersable, dans des hydroxydes alcalins ou dans des solutions aqueuses de ces derniers.

3. Masse moulable selon la revendication 1 ou 2, caractérisée en ce qu'on remplace le composant a), b) ou c), partiellement, de préférence jusqu'à 10 % en poids, par un mélange d'oxydes, composé de SiO₂ amorphe et d'oxyde d'aluminium, obtenu sous forme de poussière recueillie sur le filtre d'un four.

4. Corps moulé, fabriqué à partir de masses moulables selon au moins une des revendications 1 à 3, caractérisé en ce qu'on mélange les composants solides a), b) ou c) et/ou la poussière recueillie sur le filtre du four et la solution de silicates alcalins ainsi que de préférence des charges, on verse les masses moulables obtenues dans des moules, on retire du moule la masse moulable solidifiée sous forme de corps moulé et, le cas échéant, on la durcit à une température d'au moins 50°C.

5. Corps moulé selon la revendication 4, caractérisé en ce que le durcissement est réalisé à une température comprise entre 50 et 100°C.

6. Corps moulé selon la revendication 4 ou 5, caractérisé en ce que le durcissement est réalisé dans le moule.

7. Corps moulé selon la revendication 4 ou 5, caractérisé en ce qu'une solidification se produit dans le moule et le durcissement est réalisé après qu'on a retiré le corps moulé du moule.

8. Corps moulé selon la revendication 4, caractérisé en ce que le durcissement est réalisé sous pression, à une température comprise entre 50 et 500°C, de préférence entre 50 et 200°C.

9. Corps moulé selon l'une des revendications 4 à 8, caractérisé en ce qu'on réalise un chauffage jusqu'à 500°C après la solidification, comme phase de durcissement ou après un durcissement, à la pression atmosphérique ou sous une pression plus forte.
